# EUROPEAN PATENT APPLICATION

(11) **EP 2 100 675 A1**
(43) Date of publication of application: **16.09.2009**
(21) Application number: 08170487.6
(22) Date of filing: 02.12.2008
(51) Int. Cl.: B22C 9/10, B22C 9/12, C04B 35/64, F27D 5/00

(54) **Apparatus and method for use in firing cores**

(30) Priority: 03.12.2007 US 5182 P
(71) Applicant: Howmet Corporation, Whitehall, MI 49461-1895 (US)
(72) Inventor: Altoonian, Mark A., Morristown, MI 37814 (US); Belanger, Kari Lynn, Muskegon, MI 49445 (US)
(74) Representative: Hoeger, Stellrecht & Partner Patentanwälte

(57) **Abstract**

Apparatus and method for use in firing a ceramic casting core includes a saggar and a core setter insert disposed in the saggar. The core setter insert can be disposed on a refractory particulate grog bed or supports on a bottom wall of the saggar. The core setter insert has a core-receiving surface, which can have an airfoil shape to receive an airfoil-shaped ceramic casting core used in casting hollow airfoil castings.

## Description

### FIELD OF THE INVENTION

The present invention relates to the firing (sintering) of one or more ceramic cores used for the casting of molten metallic materials.

### BACKGROUND OF THE INVENTION

Most manufacturers of gas turbine engines are evaluating advanced investment cast turbine airfoils (i.e. turbine blade or vane) which include intricate air cooling channels to improve efficiency of airfoil internal cooling to permit greater engine thrust and provide satisfactory airfoil service life. Internal cooling passages are formed in the cast airfoils using one or more thin airfoil shaped ceramic cores positioned in a ceramic shell mold where the molten metal is cast in the mold about the core. After the molten metal solidifies, the mold and core are removed to leave a cast airfoil with one or more internal passages where the cores formerly resided.

The ceramic core is typically made using a plasticized ceramic compound comprising ceramic flour, binder and various additives. The ceramic compound is injection molded, transfer molded or poured at elevated temperature in a core die or mold. When the green (unfired) core is removed from the die or mold, it typically is placed on a rigid ceramic setter to cool to ambient temperature before core finishing and gauging operations and firing at an elevated sintering temperature. The green ceramic core is fired on the ceramic core setter at elevated (superambient) temperature in one or more steps to sinter and strengthen the core for use in casting metallic material, such as a nickel base or cobalt base superalloy. U.S. Patent 6 403 020 discloses a green ceramic core positioned on a rigid core setter during firing. US Patents 5 014 763 and 6 347 660 disclose a green ceramic core positioned between top and bottom setters during firing. The rigid core setter is used during firing to maintain dimensional tolerances of the ceramic core since any setter contour distortion can adversely affect the dimensional tolerances achievable during firing of a ceramic core thereon. For example, setter contour distortion may result in the green ceramic core having dimensional variations from one ceramic core to the next occur in a production run.

In practice, multiple ceramic setters can be stacked atop one another in order to fire multiple ceramic cores concurrently. When the firing temperature is in the 3000 degrees F realm, the ceramic setters can continually disort over time and the weight of each setter is magnified in the stack. When the ceramic setters distort, core contour dimensional variations can occur.

### SUMMARY OF THE INVENTION

The present invention provides apparatus for use in firing a ceramic casting core wherein the apparatus includes a saggar and a core setter insert disposed in the saggar and having a core-receiving surface.

In an illustrative embodiment of the invention, the apparatus further includes a refractory particulate grog bed disposed on a bottom wall of the saggar wherein the core setter insert is disposed on the grog bed during firing (sintering).

In another illustrative embodiment of the invention, the apparatus further includes upstanding refractory supports disposed on a bottom wall of the saggar wherein the core setter insert is disposed on the supports during firing.

In a further illustrative embodiment of the invention, the core-receiving surface has an airfoil shape. An airfoil-shaped core is disposed on the core-receiving surface for firing.

In still a further illustrative embodiment of the invention, the bottom wall of the saggar includes apertures for receiving core ejector pins.

A method embodiment of the invention involves stacking multiple saggars, having core setter inserts/cores therein, atop one another and then firing the ceramic cores residing on the core setter inserts in the stacked setters. The saggars are stacked atop sidewalls of other saggars residing therebelow in the stack.

Practice of the invention is advantageous to reduce core contour dimensional variations resulting from core setter distortion during firing, especially for thin complex airfoil-shaped cores used to cast hollow airfoil-shaped castings, such as turbine blades and vanes.

The above and other advantages of the present invention will become more readily apparent from the following detailed description taken with the following drawings.

### DESCRIPTION OF THE DRAWINGS

Figure 1 is a perspective view of a saggar.
Figure 2 is a sectional view of the saggar wherein the dashed lines are used to represent drafted inner surfaces of upstanding sidewalls of the saggar and wherein the sidewall to bottom wall junction is shown as being a fillet joint.
Figure 3 is a perspective view of a core setter insert illustrated as having an airfoil-shaped, upwardly facing core-receiving surface and a base.
Figure 4 is a perspective view, partially in section, showing apparatus according to an embodient of the invention wherein the core setter insert is disposed on a refractory particulate grog bed in the saggar.
Figure 5 is a sectional showing apparatus according to another embodiment of the invention wherein the core setter insert is disposed on refractory supports on the bottom wall of the saggar and wherein core ejector pins are movable through apertures in the bottom wall.
Figure 6 is a partial perspective view of an illustrative ceramic core having an airfoil shape.

### DESCRIPTION OF THE INVENTION

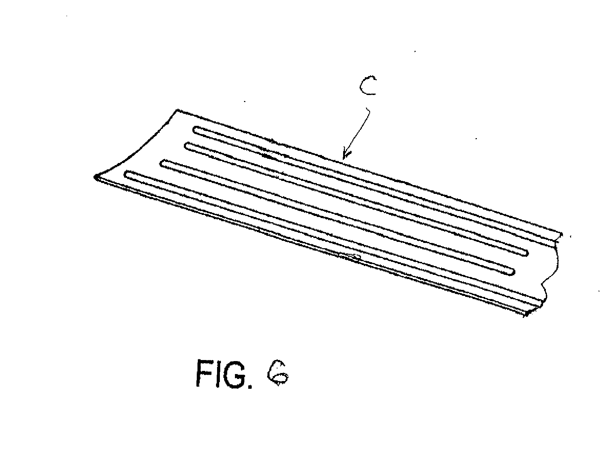

The present invention is described herebelow for purposes of illustration with respect to apparatus/method for use firing a ceramic casting core C, Figure 6, having an airfoil shape. Such ceramic casting cores are used in casting hollow airfoil castings, such as turbine blades and vanes, having one or more internal cooling passageways and are described in US Patents 5 014 763 and 6 347 660, which are incorporated herein by reference. The ceramic casting core for use in casting a hollow airfoil casting can be made using a plasticized ceramic compound comprising ceramic flour, binder and various additives. The ceramic compound is injection molded, transfer molded or poured at elevated temperature in a core die or mold. When the green (unfired) core is removed from the die or mold, it typically is placed on a rigid ceramic setter to cool to ambient temperature before core finishing and gauging operations and firing at an elevated sintering temperature. The green ceramic core is fired on the ceramic setter at elevated (superambient) temperature in one or more steps to sinter and strengthen the core for use in casting metallic material, such as a nickel base or cobalt base superalloy for example.

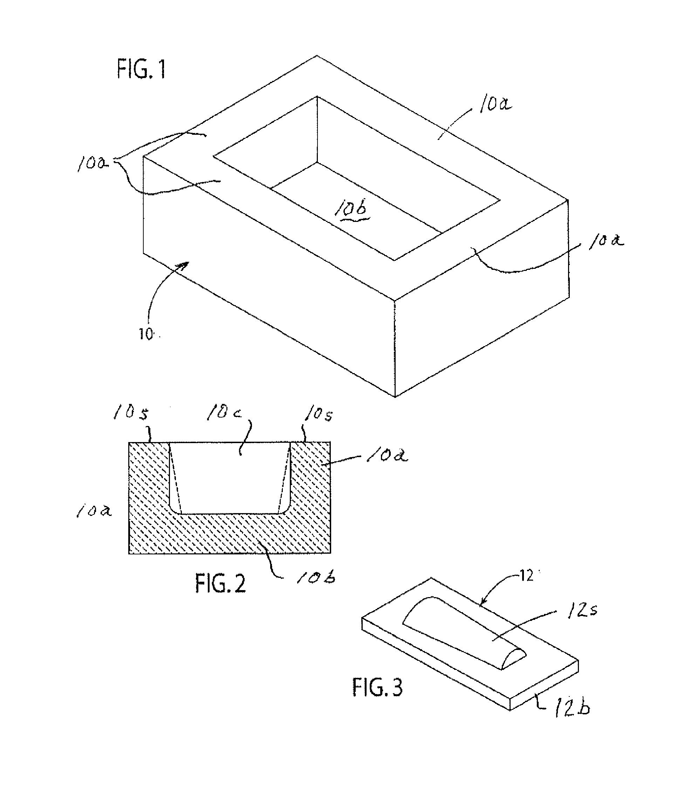

An embodiment of the present invention provides apparatus for use in firing (sintering) a green, unfired ceramic casting core wherein the apparatus includes a refractory saggar 10 and a refractory core setter insert 12 disposed in the saggar as shown in Figures 1-4 for purposes of illustration and not limitation.

The saggar 10 comprises a preformed fired, refractory box-like enclosure having sidewalls 10a and bottom wall 10b. The saggar typically is reusable and can be made of any suitable refractory material, such as a high temperature ceramic material including but not limited to mullite material, alumina-based material, and the like, that can withstand repeated firings over time and that can be fabricated to desired saggar shape.

The dimensions of the saggar 10 are selected to form a saggar chamber 10c to receive the core setter insert 12 and the ceramic casting core thereon and yet render the saggar strong and durable enough for intended repeated use. The dimensions of the saggar chamber are selected in dependence on the size or sizes of various core setter inserts/casting cores to be fired. Typically, the chamber 10c will be capable of receiving various sizes of core setter inserts/casting cores to be fired for versatility in use of the saggar. For purposes of illustration and not limitation, the sidewalls 10a and bottom wall 10b can have a thickness of one (1) inch.

The inner surfaces of the sidewalls 10a can be drafted as illustrated by dashed lines in Figure 2. Also, the junction of the sidewalls 10a to bottom wall 10b can form a fillet joint as shown in Figure 2. The sidewalls 10a can be provided with recesses 10r on their innser surfaces to provide access to remove the ceramic casting core after firing and/or airflow during firing of the core.

The core setter insert 12 comprises a preformed fired, rigid ceramic setter having a core-receiving surface 12s. For purposes of illustration, the surface 12s is shown having a partial airfoil shape for receiving ceramic casting core C having a complementary airfoil shape. The surface 12s has a preselected desired profile or contour complementary to a surface of the green ceramic casting core to be fired thereon.

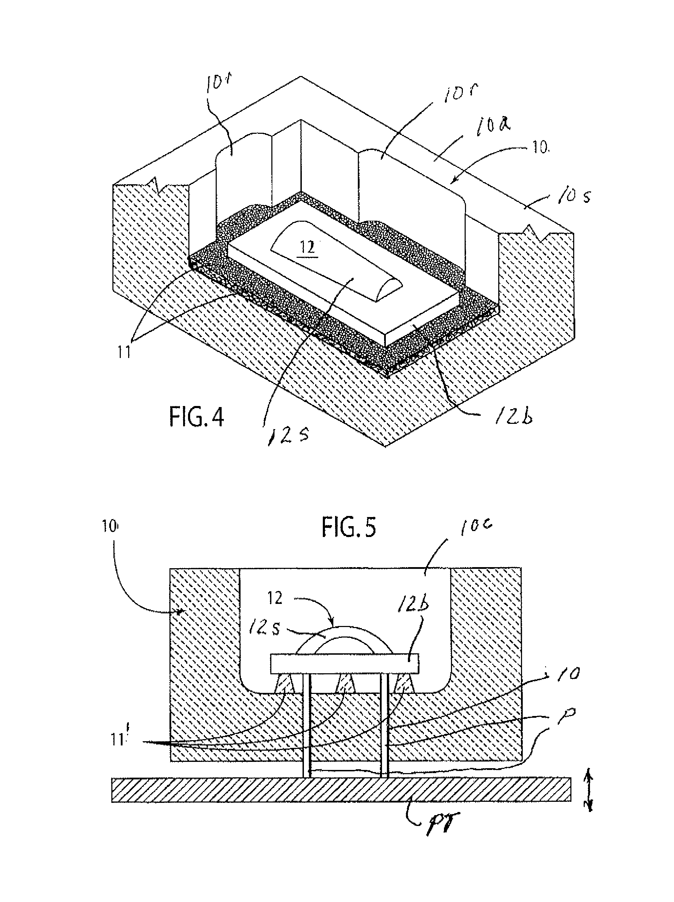

The core setter insert 12 includes a base 12b that is adapted to rest on refractory particulate grog bed 11 in one embodiment, Figure 4, or on refractory supports 11' in another embodiment, Figure 5. The core setter insert can be made by conventional poured molding technique where a plasticized ceramic compound is introduced into a die or mold (not shown), although the core setter insert can be made by other processes including, but not limited to, injection molding and transfer molding. Conventional poured setter molding involves mixing one or more ceramic flours (e.g. alumina, silica, zircon, and/or zirconia flour), a liquid binder such as catalytically cured ethyl silicate liquid binder which contains a volatile alcohol constituent, and other additives, pouring the mixture in a mold or die having the shape of the core setter insert, curing the mixture, and and then removing the green core setter insert from the mold or die for firing. The core setter insert can be made with reduced thickness and outer periphery and less material (less mass) than otherwise used in the past as a result of isolation of the core setter insert from loads and distortion during firing in practice of the invention.

In an illustrative embodiment of the invention shown in Figure 4, the apparatus for use in firing the ceramic casting core includes the refractory particulate grog bed 11 residing on the bottom wall 10b of the saggar 10 and on which the core setter insert 12 is disposed and floats during firing. The grog bed 11 can comprise any suitable refractory material, such as high temperature ceramic particles including but not limited to coarse alumina particles, mullite particles, and the like, depending on core firing temperatures to be used, in the form of loose particles and of a bed thickness to help isolate the setter insert from loads and distortion during firing. For purposes of illustration and not limitation, the bed thickness can be from 1/4 to 1 inch, although other thicknesses can be used. After firing, the casting core can be removed manually by access through reccesses 10r using fingers or a suitable core removal tool, or core ejector mechanism. Alternately or in addition, windows (not shown) can be provided in the sidwalls 10a and/or bottom wall 10b to provide access to facilitate core removal.

In another illustrative embodiment of the invention shown in Figure 5, the apparatus includes upstanding refractory supports 11' such as pegs residing on the bottom wall 10b of the saggar wherein the core setter insert is disposed on the supports during firing. The bottom wall 10b can include apertures 10d through which ejector pins P of an injector plate P of a core ejector mechanism can extend to facilitate removal of the fired casting core from the saggar 10 after the saggar is removed from a firing furnace.

The invention typically is practiced by firing (sintering) multiple ceramic casting cores concurrently for sake of high production and reduced costs, although a single ceramic casting core can be fired if desired. The temperature/time of firing will depend on the particular casting cores to be fired to provide desired fired core casting strength. The invention is not limited to any particular firing temperature/time. Firing temperatures can be in the realm of 3000 degrees F for some casting cores. In firing multiple ceramic casting cores, a method embodiment of the invention involves stacking multiple saggars 10 (having the core setter inserts 12/casting cores therein) of the type described above atop one another and then firing the ceramic casting cores residing on the core setter inserts in the stacked setters. The saggars 10 are stacked atop sidewalls of other saggars residing therebelow in the stack. For example, the top saggar is stacked so that its bottom wall 10b resides on the upwardly facing, sidewall surface 10s of the saggar next below it and so on down the stack of saggars. The lowermost saggar will have its bottom wall rest on a conventional refractory, ceramic or metallic support (not shown) such a high temperature ceramic or metallic plate. The weight of each saggar 10 is thereby placed on the sidewalls 10b of the saggar next below. Stacking of the saggars 10 in the manner described reduces loads on and distortion of the core setter inserts 12 during repeated firings and thus on the casting cores being fired to improve dimensional consistency of the fired casting cores. A bowed or twisted saggar can be reused in subsequent casting core firings without adverse affect on yield of acceptable casting cores. The core setter insert can be refaced after firing(s) if needed to maintain dimensional consistencies.

It will be apparent to those skilled in the art that variations can be made in the embodiments of the invention described without departing from the scope of the invention set forth in the claims.

## Claims

1. Apparatus for use in firing a ceramic casting core, comprising a saggar and a core setter insert disposed in the saggar, said core setter insert having a core-receiving surface.

2. The apparatus of claim 1 including a refractory particulate grog bed or refractory supports disposed on a bottom wall of the saggar wherein said core setter insert is disposed on the grog bed or support posts.

3. The apparatus of claim 1 wherein the core-receiving surface has an airfoil shape.

4. The apparatus of claim 3 further including an airfoil-shaped core disposed on the core-receiving surface.

5. The apparatus of claim 1 including apertures in the bottom wall of the saggar for receiving core ejector pins.

6. A method of supporting an unfired ceramic casting core for firing, comprsing the step of disposing the unfired ceramic casting core on a core setter insert that is disposed in a refractory saggar.

7. The method of claim 6 including placing the core setter insert on a refractory particulate grog bed or refractory supports disposed on a bottom wall of the saggar.

8. The method of claim 6 including stacking multiple saggars atop one another.

9. The method of claim 8 wherein the saggars are stacked atop sidewalls of other saggars residing therebelow in the stack.

10. The method of claim 6 wherein the core setter insert includes a core-receiving surface.

11. The method of claim 10 wherein the core-receiving surface has an airfoil shape.

12. The method of claim 11 wherein an airfoil-shaped core is disposed on the core-receiving surface.
